# EUROPÄISCHE PATENTSCHRIFT

(11) **EP 4 099 281 B1**
(45) Veröffentlichungstag und Bekanntmachung des Hinweises auf die Patenterteilung: **09.04.2025**
(21) Anmeldenummer: 22176785.8
(22) Anmeldetag: 01.06.2022
(51) Int. Cl.: G06V 40/16, G06V 40/50

(54) **VERFAHREN UND VORRICHTUNG ZUM BESTIMMEN EINES DIGITALEN BIOMETRISCHEN PASSBILDS FÜR EIN SICHERHEITSDOKUMENT SOWIE VERFAHREN ZUM PERSONALISIEREN EINES SICHERHEITSDOKUMENTS**
METHOD AND APPARATUS FOR DETERMINING A DIGITAL BIOMETRIC PICTURE FOR A SECURITY DOCUMENT AND METHOD FOR PERSONALIZING A SECURITY DOCUMENT
PROCÉDÉ ET DISPOSITIF PERMETTANT DE DÉTERMINER UNE PHOTO DE PASSEPORT BIOMÉTRIQUE NUMÉRIQUE POUR UN DOCUMENT DE SÉCURITÉ, AINSI QUE PROCÉDÉ DE PERSONNALISATION D'UN DOCUMENT DE SÉCURITÉ

(30) Priorität: 03.06.2021 DE 102021114402
(43) Veröffentlichungstag der Anmeldung: 07.12.2022
(73) Patentinhaber: Bundesdruckerei GmbH, 10969 Berlin (DE)
(72) Erfinder: PETERS, Dr. Florian, 10437 Berlin (DE)
(74) Vertreter: Bittner, Thomas L.

(56) Entgegenhaltungen:
- US-A1- 2013 215 275
- US-A1- 2016 012 279
- US-A1- 2019 082 100
- ZHOU YIREN ET AL: "Computation and Memory Efficient Image Segmentation", IEEE TRANSACTIONS ON CIRCUITS AND SYSTEMS FOR VIDEO TECHNOLOGY, vol. 28, no. 1, 1 January 2018 (2018-01-01), USA, pages 46 - 61, XP055965911, ISSN: 1051-8215, DOI: 10.1109/TCSVT.2016.2600261
- UCHIDA KAORU ET AL: "Indoor location estimation based on robust floor fingerprint identification", 2017 INTERNATIONAL CONFERENCE ON INDOOR POSITIONING AND INDOOR NAVIGATION (IPIN), IEEE, 18 September 2017 (2017-09-18), pages 1 - 8, XP033261554, DOI: 10.1109/IPIN.2017.8115962

## Beschreibung

Die Erfindung betrifft ein Verfahren und eine Vorrichtung zum Bestimmen von Passbilddaten, die ein digitales biometrisches Passbild für ein Sicherheitsdokument repräsentieren, aus Videobildaufnahmen sowie ein Verfahren zum Personalisieren eines Sicherheitsdokuments.

### Hintergrund

Es ist bekannt, Personen anhand von biometrischen Gesichtsmerkmalen zu identifizieren. Solche biometrischen Gesichtsmerkmale können in Verbindung mit Sicherheitsdokumenten wie beispielsweise Ausweisen oder Pässen aus biometrischen Passbildern auf dem Sicherheitsdokument abgeleitet werden. Mittels des biometrischen Passbildes ist das Sicherheitsdokument personalisiert und ermöglicht ein Identifizieren der Person, wahlweise in Verbindung mit weiteren Sicherheitselementen des Sicherheitsdokuments.

Zum Bestimmen von Passbilddaten, die ein digitales biometrisches Passbild einer Person repräsentieren, werden üblicherweise Einzelbildaufnahmen mittels einer Kameraeinrichtung für die Person erfasst. Wird nach einer erfolgten Bildaufnahme festgestellt, dass ein oder mehrere Prüfkriterien für die Eignung als biometrisches Passbild nicht erfüllt sind, können ein oder mehrere weitere Einzelbildaufnahmen folgen.

Mit dem Dokument EP 1 413 972 A1 wird ein Prüfverfahren für digitalisierte Personenaufnahmen, bereitgestellt, sowie Vorrichtungen zur Durchführung des Verfahrens. Das Verfahren ist insbesondere zum Überprüfen der Eignung einer Personenaufnahme für eine Personenidentifizierung verwendbar. Es umfasst die Schritte: Segmentieren der Personenaufnahme in einen Hintergrundbereich und einen Kopf- oder Gesichtsbereich, Analysieren des Kopf- oder Gesichtsbereichs, um wenigstens einen Kennwert zu ermitteln, Vergleichen des wenigstens einen Kennwerts mit wenigstens einem vorbestimmten Schwellwert.

Die Dokumente DE 10 2013 203 433 A1 und US 2016 / 012279 A1 betreffen eine Vorrichtung zur Erfassung personenspezifischer Daten einer Person, wobei die personenspezifischen Daten ein Gesichtsbild der Person umfassen. Die Vorrichtung weist eine Kamera zur Aufnahme des Gesichtsbildes der Person, eine Beleuchtungseinrichtung und einen semi-transparenten Spiegel auf. Der semitransparente Spiegel ist zwischen der Person und der Kamera angeordnet ist, wobei der semi-transparente Spiegel so ausgerichtet ist, dass auf der der Person zugewandten Seite des semi-transparenten Spiegels der Strahlengang von auf den semi-transparenten Spiegel einfallendem Licht parallel ist zum Strahlengang des vom semi-transparenten Spiegel zurück reflektierten Teil dieses Lichts. Die Beleuchtungseinrichtung ist für eine frontseitige Beleuchtung der Person ausgebildet. Die Vorrichtung weist ferner eine Steuerungseinheit auf zur Durchführung einer Bilderfassung durch Erzeugung von Licht durch die Beleuchtungseinrichtung zur Beleuchtung des Gesichts der Person und während der Beleuchtung Erfassen eines ersten Bildes des Gesichts der Person durch die Kamera, Erfassen eines zweiten Bildes des Gesichts der Person durch die Kamera ohne die Erzeugung des Lichts, Bildung eines ersten Differenzbildes des ersten Bildes und des zweiten Bildes, wobei im ersten Differenzbild das Gesicht der Person vom Hintergrund freigestellt ist, wobei die personenspezifischen Daten das erste Differenzbild als das Gesichtsbild umfassen.

In den Dokumenten US 2013 / 215275 A1 und US 2016 / 154991 A1 ist ein biometrischer und Identitätsregistrierungskiosk zum Sammeln persönlicher Daten beschrieben. Die Vorrichtung umfasst ein verschiebbares Hauptmodul und mindestens einen modifizierbaren Abschnitt, der lösbar mit dem Hauptmodul gekoppelt ist. Das Hauptmodul umfasst einen Prozessor und eine oder mehrere mit dem Prozessor gekoppelte biometrische Erfassungsvorrichtungen, die eine Gesichtskamera umfassen können.

Das Dokument US 2019 / 082100 A1 beschreibt ein Verfahren zur Aufnahme eines Fotos zur Verwendung in einem persönlichen Lichtbildausweis. Das Verfahren umfasst die Verwendung eines digitalen Bilderfassungssystems mit einer Digitalkamera, einem Computerprozessor und einem Speicher zum Speichern von Spezifikationen und Anforderungen für einen Fotodruck, um konform zur Verwendung in einem vom Benutzer ausgewählten Lichtbildausweis, z. B. einem Reisepass für ein ausgewähltes Land oder eine ausgewählte Gerichtsbarkeit zu sein. Das digitale Bilderfassungssystem wird zum Erfassen eines Gesichtsbildes genutzt, Gesichtsbildverarbeitungstechniken werden zur automatischen Erkennung eines Gesichts und Gesichtsmerkmalspunkten auf dem Gesichtsbild verwendet, das Gesichtsbild wir verarbeitet und ein visueller Hinweis auf die Einhaltung wird erzeugt, und bei Einhaltung wird das Foto auf der Grundlage des konformen Gesichtsbilds erzeugt.

### Zusammenfassung

Aufgabe der Erfindung ist es, ein Verfahren und eine Vorrichtung zum Bestimmen von Passbilddaten, die ein digitales biometrisches Passbild für ein Sicherheitsdokument repräsentieren, anzugeben, mit denen der Prozess des Erzeugens der Passbilddaten effizient und mit geminderter Fehleranfälligkeit ausgeführt werden kann. Darüber hinaus soll ein Verfahren zum Personalisieren eines Sicherheitsdokuments in diesem Zusammenhang verbessert werden.

Zur Lösung der Aufgabe sind ein Verfahren und eine Vorrichtung zum Bestimmen von Passbilddaten, die ein digitales biometrisches Passbild für ein Sicherheitsdokument repräsentieren, nach den unabhängigen Ansprüchen 1 und 14 geschaffen. Weiterhin ist ein Verfahren zum Personalisieren eines Sicherheitsdokuments nach dem nebengenordneten Anspruch 12 geschaffen. Ausgestaltungen sind Gegenstand von abhängigen Unteransprüchen.

Nach einem Aspekt ist ein Verfahren zum Bestimmen von Passbilddaten, die ein digitales biometrisches Passbild für ein Sicherheitsdokument repräsentieren, mit folgenden Schritten geschaffen: Aufnehmen einer Folge von Portraitbildern für eine Person mittels Videobildaufnahme mit einer Bildwiederholfrequenz und einer Aufnahmeauflösung für die Portraitbilder mittels einer Videobildaufnahmevorrichtung; Speichern von jeweiligen Portraitbilddaten mit der Aufnahmeauflösung und Portraitbilddaten mit einer gegenüber der Aufnahmeauflösung verminderten Auflösung für die Portraitbilder aus der Videobildaufnahme; und Bestimmen von Passbilddaten, die ein digitales biometrisches Passbild der Person repräsentieren, aus den Portraitbildern der Videobildaufnahme. Das Bestimmen der Passbilddaten umfasst Folgendes: Auswählen von ersten Portraitbildern aus der Folge von Portraitbildern; Bestimmen, ob die Portraitbilddaten, welche den ersten Portraitbildern jeweils zugeordnet sind, ersten Prüfkriterien bezüglich einer Eignung für ein digitales biometrisches Passbild der Person erfüllen, wobei das Prüfen für die Portraitbilddaten mit der verminderten Auflösung ausgeführt wird; Auswählen eines der ersten Portraitbilder, für welches die zugeordneten Portraitbilddaten zumindest eine notwendige Teilmenge der ersten Prüfkriterien erfüllen; Bestimmen, ob die Portraitbilddaten, welche dem einen der ersten Portraitbilder zugeordnet sind, zweite Prüfkriterien bezüglich der Eignung für das digitale biometrische Passbild der Person erfüllen, wobei die zweiten Prüfkriterien von den ersten Prüfkriterien verschieden sind und das Prüfen für die Portraitbilddaten mit der verminderten Auflösung ausgeführt wird; und Erzeugen der Passbilddaten unter Verwendung der dem einen der ersten Portraitbilder zugeordneten Portraitbilddaten mit der Aufnahmeauflösung, wenn die Portraitbilddaten mit der verminderten Auflösung, welche dem einen der ersten Portraitbilder zugeordnet sind, zumindest eine notwendige Teilmenge der zweiten Prüfkriterien erfüllen.

Nach einem weiteren Aspekt ist eine Vorrichtung zum Bestimmen von Passbilddaten, die ein digitales biometrisches Passbild für ein Sicherheitsdokument repräsentieren, mit einer Passbildaufnahmeeinrichtung geschaffen, die für Folgendes eingerichtet ist: Aufnehmen einer Folge von Portraitbildern für eine Person mittels Videobildaufnahme mit einer Bildwiederholfrequenz und einer Aufnahmeauflösung für die Portraitbilder mittels einer Videobildaufnahmevorrichtung; Speichern von jeweiligen Portraitbilddaten mit der Aufnahmeauflösung und Portraitbilddaten mit einer gegenüber der Aufnahmeauflösung verminderten Auflösung für die Portraitbilder aus der Videobildaufnahme; und Bestimmen von Passbilddaten, die ein digitales biometrisches Passbild der Person repräsentieren, aus den Portraitbilder der Videobildaufnahme.

Weiterhin ist die Vorrichtung in Verbindung mit dem Bestimmen der Passbilddaten für Folgendes eingerichtet: Auswählen von ersten Portraitbildern aus der Folge von Portraitbildern; Bestimmen, ob die Portraitbilddaten, welche den ersten Portraitbildern jeweils zugeordnet sind, ersten Prüfkriterien bezüglich einer Eignung für ein digitales biometrisches Passbild der Person erfüllen, wobei das Prüfen für die Portraitbilddaten mit der verminderten Auflösung ausgeführt wird; Auswählen eines der ersten Portraitbilder, für welches die zugeordneten Portraitbilddaten zumindest eine notwendige Teilmenge der ersten Prüfkriterien erfüllen; Bestimmen, ob die Portraitbilddaten, welche dem einen der ersten Portraitbilder zugeordnet sind, zweite Prüfkriterien bezüglich der Eignung für das digitale biometrische Passbild der Person erfüllen, wobei die zweiten Prüfkriterien von den ersten Prüfkriterien verschieden sind und das Prüfen für die Portraitbilddaten mit der verminderten Auflösung ausgeführt wird; und Erzeugen der Passbilddaten unter Verwendung der dem einen der ersten Portraitbilder zugeordneten Portraitbilddaten mit der Aufnahmeauflösung, wenn die Portraitbilddaten mit der verminderten Auflösung, welche dem einen der ersten Portraitbilder zugeordnet sind, zumindest eine notwendige Teilmenge der zweiten Prüfkriterien erfüllen.

Nach einem anderen Aspekt ist ein Verfahren zum Personalisieren eines Sicherheitsdokuments geschaffen, welches folgende Schritte aufweist: Bestimmen von ein digitales biometrisches Passbild repräsentierenden Passbilddaten; Bereitstellen der Passbilddaten in einer Personalisierungseinrichtung; Bereitstellen eines Sicherheitsdokuments; und Personalisieren des Sicherheitsdokuments, wobei bei hierbei die Passbilddaten in der Personalisierungseinrichtung verarbeitet werden und eine Repräsentation des digitalen biometrischen Passbildes auf dem Sicherheitsdokument aufgebracht wird.

Mit Hilfe der vorgeschlagenen Technologie ist es ermöglicht, die ein digitales biometrisches Passbild repräsentierenden Passbilddaten aus den Videobildaufnahmen selbst zu bestimmen. Es bedarf also keiner (ergänzenden) Einzelbildaufnahme, wie dies im Stand der Technik bekannt ist, wenn der Person mittels Videobild vor der Einzelbildaufnahme Hinweise gegeben werden können, zum Beispiel betreffend einer korrekten Kopfstellung und -ausrichtung, um dann mittels weiterer Kamera Einzelbilder aufzunehmen, welche verarbeitet werden. Es sind somit ein Verfahren und eine Vorrichtung zum Bestimmen von Passbilddaten aus Videobildaufnahmen bereitgestellt. Die Videobildaufnahmen werden mittels einer Videobildaufnahmevorrichtung, die mit der Passbildaufnahmeeinrichtung bereitgestellt ist, aufgenommen und mittels einer Datenverarbeitungseinrichtung verarbeitet, um die Passbilddaten zu erzeugen. Die Datenverarbeitungseinrichtung kann Teil der Passbildaufnahmeeinrichtung oder zumindest teilweise getrennt hiervon gebildet sein. Im Rahmen der Videobildaufnahme wird eine Abfolge von Portrait- oder Gesichtsbildern mit der Bildwiederholfrequenz (des Videobildstroms) bei einer Aufnahmeauflösung erfasst. Die Portraitbilddaten, welche jeweils die aufgenommene Portraitbilder der Person repräsentieren, werden mittels erster und zweiter Portraitbilddaten in einer Speichereinrichtung abgelegt, wobei die ersten und die zweiten Portraitbilddaten das zugeordnete Porträtbild mit unterschiedlicher Auflösung repräsentieren, nämlich der ursprünglichen Aufnahmeauflösung (während der Videobildaufnahme) und einer hier gegenüber verminderten Auflösung. Alternativ können auch schon die ersten Portraitbilddaten mit einer gegenüber der Aufnahmeauflösung verminderten Auflösung gespeichert werden, wobei die zweiten Portraitbilddaten dann eine hiergegenüber (weiter) verminderte Bildauflösung aufweisen. Es kann vorgesehen sein, die Portraitbilddaten in einem gemeinsamen Speicher (*"shared memory"*) abzulegen, auf den mehrere Datenverarbeitungsprozesse gemeinsam und koordiniert zugreifen können.

Die Portraitbilddaten mit der verminderten Auflösung werden analysiert oder verarbeitet, dahingehend, dass geprüft wird, ob Prüfkriterien bezüglich einer Eignung für ein digitales biometrisches Passbild der Person erfüllt sind. Hierbei werden zum Beispiel jeweils mehrere erste und mehrere zweite Prüfkriterien untersucht. Sofern die Portraitdaten mit der verminderten Auflösung für eines der Portraitbilder sowohl mindestens eine Teilmenge der ersten wie auch mindestens eine Teilmenge der zweiten Prüfkriterien erfüllen, werden hieraus die Passbilddaten bestimmt, die das digitale biometrische Passbild für die Person repräsentieren. Bei der Prüfung bezüglich der zweiten Prüfkriterien bleiben Portraitbilddaten unberücksichtigt, welche nicht zumindest die notwendige Teilmenge der ersten Prüfkriterien erfüllen.

Die notwendige Teilmenge der Prüfkriterien kann anwendungsabhängig festgelegt werden und bestimmt, dass nicht notwendigerweise alle jeweiligen Prüfkriterien von den untersuchten Portraitbilddaten erfüllt werden müssen, sondern nur eine Mindestanzahl. In alternativen Ausgestaltungen kann vorgesehen sein, dass die Portraitbilddaten für die ersten Prüfkriterien und / oder die zweiten Prüfkriterien alle tatsächlich untersuchten Prüfkriterien erfüllen müssen, um als geeignet für das digitale biometrische Passbild bestimmt zu werden. Die notwendige Teilmenge von Prüfkriterien kann eine Mindestanzahl von Prüfkriterien angeben, die erfüllt sein müssen, wobei es hierbei nicht darauf ankommt, welche der Prüfkriterien erfüllt sind. Alternativ kann vorgesehen sein, dass die notwendige Teilmenge Prüfkriterien bestimmter Art festlegt, die notwendigerweise erfüllt sein müssen, um eine Eignung für das digitale biometrische Passbild festzustellen. Ist für die Prüfkriterien eine gewichtete Reihenfolge gegeben, kann vorgesehen sein, die Prüfkriterien der gewichteten Reihenfolge entsprechend nacheinander zu prüfen und die Prüfung abzubrechen, wenn die notwendige Teilmenge erfüllt ist, beispielsweise eine Mindestanzahl.

Das Bestimmen der Passbilddaten kann in einer Ausführungsform mittels eines Datenverarbeitungsprozesses ausgeführt werden, der zumindest teilweise mittels eines FPGA-Bausteins implementiert ist, wobei der Datenverarbeitungsprozess auf das Speichermedium mit den Portraitbilddaten mit den unterschiedlichen Auflösungen Zugriff hat. Diese Ausführungsform kann eine Parallelisierung von Datenverarbeitungsprozessen vorteilhaft unterstützen.

Das Aufnehmen der Folge von Portraitbildern für die Person mittels Videobildaufnahme und das Speichern von jeweiligen Portraitbilddaten mit der Aufnahmeauflösung und Portraitbilddaten mit der verminderten Auflösung für die Portraitbilder können während des Bestimmens der Passbilddaten zumindest zeitweise fortgesetzt werden. Hierbei wird der Prozess zum Aufnehmen und zum Abspeichern der Portraitbilder, die im Rahmen der Videobildaufnahme aufgenommen werden, fortgesetzt, während in Echtzeit parallel das Bestimmen der Passbilddaten aus bereits aufgenommenen Portraitbildern der Videobildaufnahme ausgeführt wird. Die Fortsetzung des Aufnehmens von Portraitbildern mittels Videobildaufnahme kann während der Bestimmung der Passbilddaten fortdauernd (durchgehend) oder unterbrochen erfolgen. Datenverarbeitungsprozesse zum Speichern der Portraitbilddaten und zum Bestimmen der Passbilddaten sind hierbei parallelisiert und können auf gleichen oder unterschiedlichen Datenverarbeitungskomponenten ausgeführt werden, beispielsweise einem FPGA-Baustein sowie einem oder mehreren Prozessoren.

Das Aufnehmen der Folge von Portraitbildern für die Person mittels Videobildaufnahme kann beendet werden, wenn die Passbilddaten erzeugt wurden. Wenn die Passbilddaten für die Person erzeugt sind, welche das digitale biometrische Passbild repräsentieren oder anzeigen, wird die Videobildaufnahme automatisch beendet, was als Reaktion auf ein entsprechendes Steuersignal an die Videobildaufnahmevorrichtung erfolgen kann. Bis zu diesem Zeitpunkt kann das Aufnehmen der Portraitbilder mittels Videobildaufnahme fortgesetzt werden.

Die Portraitbilder aus der Videobildaufnahme können in Echtzeit der Person als Videobildausgabe auf einer Anzeigeeinrichtung angezeigt werden, welche mit der Passbildaufnahmeeinrichtung verbunden ist. Bei dieser Ausführungsform werden die aufgenommenen Portraitbilder in Echtzeit parallel zum Aufnehmen auf der Anzeigeeinrichtung der Person und dargestellt, was dann zeitlich parallel zum Bestimmen der Passbilddaten erfolgt. Die Person erhält eine Art Rückkopplung über die Videobildaufnahmen und kann wahlweise selbständig Änderungen vornehmen, zum Beispiel bezüglich der Kopfposition oder der Blickrichtung.

Nach dem Erzeugen der Passbilddaten kann das digitale biometrische Passbild der Person auf der Anzeigeeinrichtung angezeigt werden. Bei dieser Ausführungsform ist vorgesehen, dass das digitale biometrische Passbild, welches die Passbilddaten anzeigen, der Person über die Anzeigeeinrichtung zur Kenntnis gebracht wird. Dieses kann zeitlich parallel zu der noch laufenden Videobildaufnahme und deren Ausgabe über die Anzeigeeinrichtung ausgeführt werden. Auf der Anzeigeeinrichtung kann ein separiertes Anzeigefenster genutzt werden, um das biometrische Passbild der Person zur Kenntnis zu bringen. Es kann vorgesehen sein, nach dem Anzeigen des digitalen biometrischen Passbilds auf der Anzeigeeinrichtung eine Benutzereingabe der Person in der Passbildaufnahmeeinrichtung zu empfangen, welche eine Zustimmung der Person zu dem biometrischen Passbild anzeigt. Hierauf kann die noch laufende Videobildaufnahme beendet werden. Auch kann als Reaktion auf die Benutzereingabe die weitere Be- oder Verarbeitung der Passbilddaten begonnen werden.

Die Passbilddaten können an eine Personalisierungseinrichtung übertragen werden, die eingerichtet ist, die Passbilddaten zu verarbeiten, derart, dass eine Repräsentation des digitalen biometrischen Passbildes auf einem Dokumentenkörper für ein Sicherheitsdokument aufgebracht wird. Die Passbilddaten können in Form einer Passbilddatendatei an die Personalisierungseinrichtung übertragen werden. Das Übertragen der Passbilddaten an die Personalisierungseinrichtung kann nach dem Erzeugen der Passbilddaten erfolgen. Alternativ kann vorgesehen sein, dass das Übertragen der Passbilddaten an die Personalisierungseinrichtung erst ausgeführt wird, nachdem eine Benutzereingabe betreffend die Zustimmung der Person zu dem biometrischen Passbild empfangen wurde. Die Personalisierungseinrichtung dient dem Personalisieren des Sicherheitsdokuments, indem hierauf eine Repräsentation des digitalen biometrischen Passbilds aufgebracht wird, beispielsweise mittels Aufdrucken des Passbilds und / oder Speichern der Passbilddaten in einem Speicherelement des Sicherheitsdokuments.

Weiterhin kann bei dem Verfahren Folgendes vorgesehen sein: Auswählen von zweiten Portraitbildern aus der Folge von Portraitbildern, die von den ersten Portraitbildern verschieden sind, wenn für keines der ersten Portraitbilder festgestellt wird, dass die zugeordneten Portraitbilddaten die notwendige Teilmenge der ersten und die notwendige Teilmenge der zweiten Prüfkriterien erfüllt sind; Bestimmen der den zweiten Portraitbildern zugeordneten Portraitbilddaten entsprechend dem Bestimmen der den ersten Portraitbildern zugeordneten Portraitbilddaten; und Erzeugen der Passbilddaten unter Verwendung von Portraitbilddaten, welche einem der zweiten Portraitbilder zugeordnet sind, wenn die Portraitbilddaten zumindest die notwendige Teilmenge der ersten Prüfkriterien und zumindest die notwendige Teilmenge der zweiten Prüfkriterien erfüllen. Hierbei werden aus dem fortdauernden Videodatenbildstrom weitere Portraitbilder ausgewählt, wenn keines der ersten Portraitbilder die notwendigen Prüfkriterien bezüglich der Eignung für das digitale biometrische Passbild erfüllt. Dieser Prozess kann mehrfach mittels Auswahl weiterer Portraitbilder wiederholt werden, bis mindestens eines der Portraitbilder die notwendigen Prüfkriterien für die Eignung als digitales biometrisches Passbild erfüllt. Zeitlich parallel zum (laufenden) Aufnehmen der Folge von Portraitbildern mittels Videobildaufnahme werden bereits erfasste Portraitbilder hinsichtlich ihrer Eignung für das digitale biometrische Passbild geprüft. Wenn für zumindest eines der Portraitbilder die zugeordneten Portraitbilddaten die geforderten Prüfkriterien erfüllen, können hieraus die Passbilddaten bestimmt werden.

Die ersten Prüfkriterien können ein oder mehrere der folgenden Prüfkriterien umfassen: Ausleuchtung des Portraitbildes, Hintergrund des Portraitbildes, Bildkontrast, Kopfposition, Augen und Blickrichtung, Kopfbedeckung und Sitz einer Brille. Die ersten Prüfkriterien erlauben das Prüfen der Portraitbilddaten hinsichtlich ihrer biometrischen Eignung, also der Eignung, für das durch die Portraitbilddaten repräsentierte Passbild eine biometrische Gesichtserkennung auszuführen. Beispielsweise kann eine solche Eignung für die biometrische Gesichtserkennung festgestellt werden, wenn mindestens folgende erste Prüfkriterien erfüllt sind: frontale Bildaufnahme, festgelegte Kopfposition im Portraitbild, strukturloser Hintergrund, neutraler Gesichtsausdruck und ausreichende Ausleuchtung (ohne Reflexionen oder Schatten auf Gesicht und Hintergrund).

Aus den ersten Portraitbildern kann ein nicht geeignetes Portraitbild bestimmt werden, für welches die zugeordneten Portraitbilddaten die notwendige Teilmenge der ersten Prüfkriterien nicht erfüllen, wobei hierauf wenigstens einer der folgenden Schritte vorgesehen ist: (i) Erzeugen von Steuerdaten als Reaktion auf das Feststellen eines Fehlers, dahingehend, dass bei dem nicht geeigneten Portraitbild eines der ersten Prüfkriterien nicht erfüllt ist, wobei die Steuerdaten eingerichtet sind, eine Ausgabe über eine Ausgabeeinrichtung an die Person zu steuern, und wobei mit der Ausgabe ein Benutzerhinweis zum Beheben des Fehlers an die Person ausgegeben wird; und (ii) Erzeugen von weiteren Steuerdaten als Reaktion auf das Feststellen eines weiteren Fehlers, dahingehend, dass bei dem nicht geeigneten Portraitbild ein weiteres der ersten Prüfkriterien nicht erfüllt ist, wobei die weiteren Steuerdaten eingerichtet sind, einen Betriebsparameter der Videobildaufnahmevorrichtung und / oder einer der Videobildaufnahmevorrichtung zugeordneten Beleuchtungseinrichtung für das Aufnehmen der Folge von Portraitbildern zu ändern. Ein Fehler kann beispielsweise erkannt werden, wenn die Person in dem untersuchten Portraitbild eine Kopfbedeckung trägt, die Augen geschlossen sind, die Blickrichtung nicht nach vorn ausgerichtet ist und / oder Haare ein Auge bedecken. Die auf das Erkennen eines solchen Fehlers erzeugten Steuerdaten sind eingerichtet, einen Benutzerhinweis an die Person auszugeben, sei es in visueller und / oder akustischer Form, um die Person zur Korrektur des Fehlers aufzufordern. Die weiteren Steuerdaten auf das Feststellen des weiteren Fehlers können zum Beispiel eine geänderte Kameraeinstellung für die Videobildaufnahmevorrichtung und / oder eine geänderte Einstellung der Beleuchtungseinrichtung zum besseren Ausleuchten betreffen. Eine intuitive Benutzerführung mittels der Steuerdaten kann vorgesehen sein, beispielsweise das Ausgeben von Benutzerhinweisen über eine Anzeigeeinrichtung, die die Person beispielsweise veranlassen die Blickrichtung zu ändern.

Mittels der zweiten Prüfkriterien kann geprüft werden, ob die Portraitbilddaten ein digitales biometrisches Passbild repräsentieren, welches dem ICAO-Standard für Passbilder für maschinenlesbare Sicherheitsdokumente genügt. Beispielsweise kann mittels der zweiten Prüfkriterien geprüft werden, ob die Portraitbilddaten folgendem Standard genügen: *"Technical Report - Portrait Quality (Reference Facial Images for MRTD)"* (Version 1.0 aus April 2018 oder aktuellere Fassung). Darin sind Standardkriterien definiert, die Portrait- oder Gesichtsbilddaten erfüllen müssen, um als digitales biometrisches Passbild für ein maschinenlesbares Sicherheitsdokument geeignet zu sein.

Die Folge von Portraitbildern kann bei der Videobildaufnahme mit einer Bildwiederholfrequenz zwischen etwa 10 Bildern pro Sekunde und etwa 30 Bildern pro Sekunde aufgenommen werden.

Beim Aufbringen der Repräsentation des digitalen biometrischen Passbildes auf das Sicherheitsdokument kann ein biometrisches Passbild aufgedruckt und / oder die Passbilddaten in einem elektronischen Speicherelement des Sicherheitsdokuments gespeichert werden.

Die vorangehend im Zusammenhang mit dem Verfahren zum Bestimmen von Passbilddaten für ein digitales biometrisches Passbild erläuterten Ausgestaltungen können im Zusammenhang mit der Vorrichtung zum Bestimmen von Passbilddaten und / oder dem Verfahren zum Personalisieren eines Sicherheitsdokuments entsprechend vorgesehen sein.

### Beschreibung von Ausführungsbeispielen

Nachfolgend werden weitere Ausführungsbeispiele unter Bezugnahme auf Figuren einer Zeichnung näher erläutert. Hierbei zeigen:
- Fig. 1: eine schematische Darstellung einer Anordnung für eine Vorrichtung zum Bestimmen von Passbilddaten, welche wahlweise mit einer Personalisierungseinrichtung verbunden ist; und
- Fig. 2: eine schematische Blockdarstellung für ein Verfahren zum Bestimmen von Passbilddaten, die ein digitales biometrisches Passbild für ein Sicherheitsdokument repräsentieren.

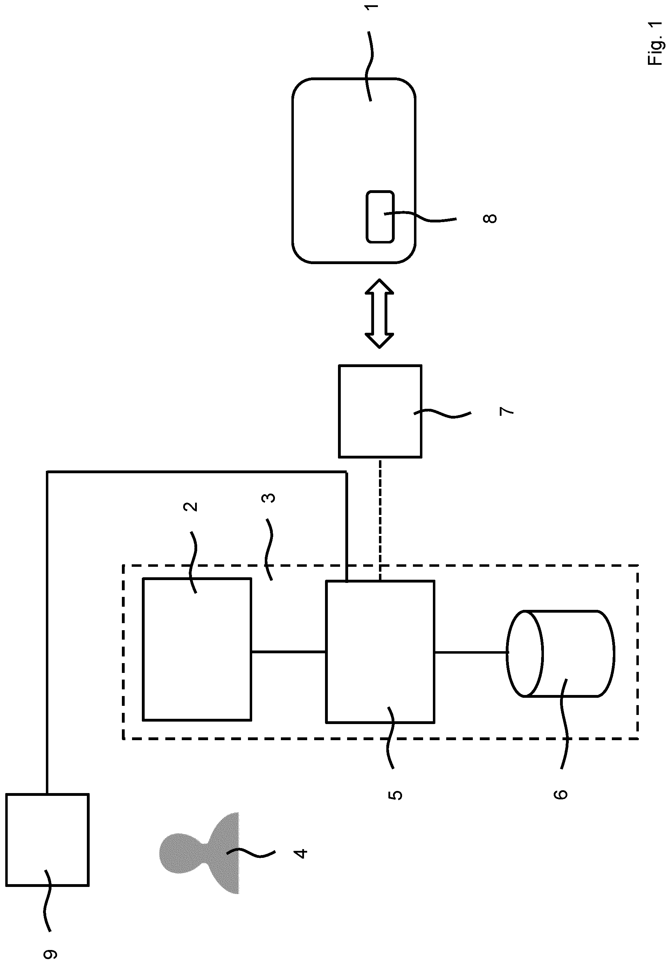

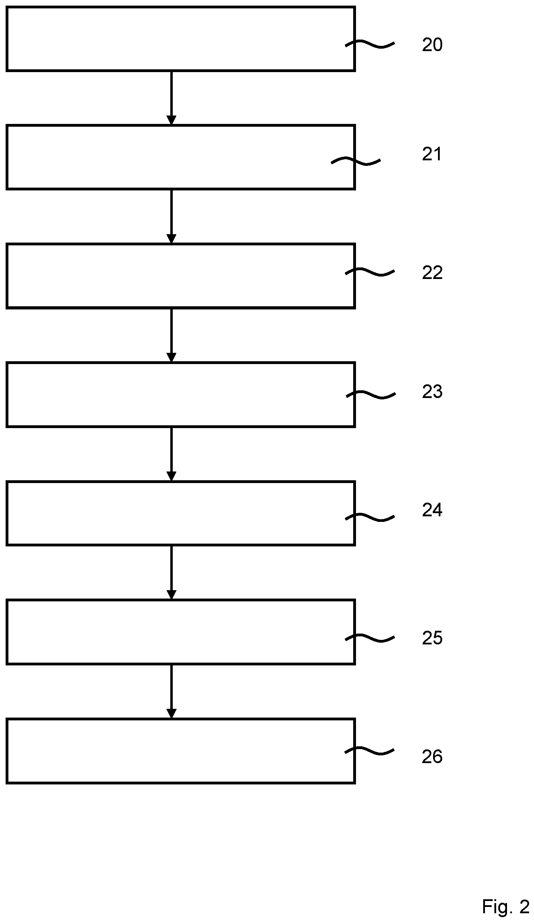

Fig. 1 zeigt eine schematische Darstellung einer Anordnung für eine Vorrichtung zum Bestimmen von Passbilddaten, die ein digitales biometrisches Passbild für ein Sicherheitsdokument 1 repräsentieren. Fig. 2 zeigt eine schematische Blockdarstellung für ein Verfahren zum Bestimmen der Passbilddaten.

Mit Hilfe einer Videobildaufnahmevorrichtung 2, die zum Beispiel mit einer Videobildkamera gebildet und im gezeigten Beispiel als Teil einer Passbildaufnahmeeinrichtung 3 bereitgestellt ist, werden im Schritt 20 für eine Person 4 Portrait- oder Gesichtsbilder im Rahmen einer Videobildaufnahme aufgenommen. Mit Hilfe einer Datenverarbeitungseinrichtung 5, die mit der Videobildaufnahmevorrichtung 2 verbunden ist, werden die in dem Videodatenstrom mit einer Bildwiederholfrequenz enthaltenen Portraitbilder in einer Speichereinrichtung 6 als digitale Portraitbilddaten abgelegt (Schritt 21). Hierbei werden Portraitbilddaten mit einer Aufnahmeauflösung gespeichert, welche der Bildauflösung beim Aufnehmen der Portraitbilder im Rahmen der Videobildaufnahme entspricht. Zusätzlich werden für die Portraitbilder jeweils Portraitbilddaten mit einer gegenüber der Aufnahmeauflösung verminderten Auflösung in der Speichereinrichtung abgelegt.

Im Schritt 22 werden aus der Folge von Portraitbildern erste Portraitbilddaten ausgewählt für einen Prozess zum Bestimmen von Passbilddaten, die ein digitales biometrisches Passbild der Person 4 repräsentieren. Für die den ersten Portraitbildern jeweils zugeordneten Portraitbilddaten wird bestimmt, ob diese erste Prüfkriterien bezüglich einer Eignung für das digitale biometrische Passbild der Person 4 erfüllen (Schritte 23). Diese Prüfung wird für die Portraitbilddaten mit der verminderten Auflösung ausgeführt. Die ersten Prüfkriterien können Prüfkriterien aus der folgenden Gruppe umfassen: Ausleuchtung des Portraitbildes, Hintergrund des Portraitbildes, Bildkontrast, Kopfposition, Augen und Blickrichtung, Kopfbedeckung und Sitz einer Brille.

Wird für die Portraitbilddaten zumindest eines der ersten Portraitbilder festgestellt, dass eine vorgegebene Menge von ersten Prüfkriterien erfüllt ist, wird das eine der ersten Portraitbilder für eine weitere Prüfung hinsichtlich der Eignung für das digitale biometrische Passbild ausgewählt (Schritt 24). Im Rahmen der weiteren Prüfung werden für die Portraitbilddaten des ausgewählten Portraitbilds zweite Prüfkriterien geprüft, die von den ersten Prüfkriterien verschieden sind. Auch die Prüfung hinsichtlich der zweiten Prüfkriterien wird für die Portraitbilddaten mit der verminderten Auflösung ausgeführt. Die zweiten Prüfkriterien können einer Prüfung dienen, ob die Portraitbilddaten ein digitales biometrisches Passbild in Übereinstimmung mit dem ICAO-Standard für Passbilder für maschinenlesbare Sicherheitsdokumente sind. Beispielsweise kann der Standard gemäß *"Technical Report - Portrait Quality (Reference Facial Images for MRTD)"* in der Version 1.0 aus April 2018 oder einer aktuelleren Fassung ausgeführt werden.

Wird festgestellt, dass die untersuchten Portraitbilddaten auch für die zweiten Prüfkriterien zumindest eine notwendige Teilmenge hiervon erfüllen, werden im Schritt 25 Passbilddaten erzeugt, die das digitale biometrische Passbild für die Person 4 repräsentieren oder anzeigen. Mit den Passbilddaten sind Bilddaten bestimmt, die eine biometrische Personenidentifizierung anhand von biometrischen Gesichtsmerkmalen ermöglichen.

Die Passbilddaten können dann im Schritt 26 wahlweise an eine Personalisierungseinrichtung 7 übertragen werden, welche eingerichtet ist, das Sicherheitsdokument 1 zu personalisieren. Hierzu kann die Personalisierungseinrichtung 7 mit einer Druckeinrichtung ausgeführt sein, mittels der das biometrische Passbild auf dem Sicherheitsdokument 1 aufgedruckt wird. Alternativ oder ergänzend kann vorgesehen sein, die Passbilddaten in einer Speichereinrichtung 8 des Sicherheitsdokuments 1 abzulegen. Hierdurch ist das Sicherheitsdokument personalisiert und ermöglicht anhand des biometrischen Passbildes eine Personenidentifizierung.

Während das Bestimmen der Passbilddaten des digitalen biometrischen Passbilds ausgeführt wird, kann das Aufnehmen der Portraitbilder mittels Videoaufnahme fortgeführt werden, so dass fortdauernd neue Portraitbilddaten bereitgestellt werden, auf die beim Bestimmen der Passbilddaten zurückgegriffen wird, bis zumindest für eines der Portraitbilder aus der Videobildaufnahme bestimmt wird, dass die ersten und die zweiten Prüfkriterien bezüglich der Eignung für das digitale biometrische Passbild erfüllt sind. Auf das Erzeugen der Passbilddaten wird die Videobildaufnahme dann beendet.

Wird beim Prüfen der Portraitbilddaten hinsichtlich der ersten Prüfkriterien ein Fehler festgestellt, welcher die Nichterfüllung zumindest eines der ersten Prüfkriterien anzeigt, können hierauf in der Passbildaufnahmeeinrichtung 3 Steuerdaten erzeugt werden, um das weitere Aufnehmen von Portraitbildern mittels Videoaufnahme zu beeinflussen, dahingehend, dass verbesserte Portraitbilder aufgenommen werden. In einer Ausgestaltung kann vorgesehen sein, dass die Steuerdaten eingerichtet sind, eine Ausgabe über eine Ausgabeeinrichtung 9 an die Person 4 zu steuern, derart, dass ein Benutzerhinweis zum Beheben des Fehlers an die Person 4 ausgegeben wird, was einen visuellen und / oder akustischen Hinweis an die Person umfassen kann, beispielsweise eine Aufforderung, eine Kopfbedeckung abzunehmen, und / oder eine Aufforderung beide Augen zu öffnen. Ähnliche Benutzerhinweise können eine Korrektur der Blickrichtung oder das Verdecken eines Auges durch Haare im Gesicht der Person 4 betreffen. Die Ausgabeeinrichtung 9, welche zum Beispiel mit einem Display gebildet sein kann, kann wahlweise in die Passbildaufnahmeeinrichtung 3 integriert sein, zum Beispiel bei der Ausbildung in einem Terminalgerät zum Erfassen von personenbezogenen Daten für das Sicherheitsdokument 1. Die Ausgabeeinrichtung 9 kann zum Empfangen von Benutzereingaben als Ein- / Ausgabeeinrichtung ausgeführt sein.

Alternativ oder ergänzend können als Reaktion auf das Feststellen eines Fehlers Steuerdaten erzeugt werden, die eingerichtet sind, einen Betriebsparameter der Videobildaufnahmevorrichtung 2 und / oder einer dieser zugeordneten Beleuchtungseinrichtung für weitere Portraitbilder im Rahmen der Videobildaufnahme zu verbessern, beispielsweise für eine verbesserte Ausleuchtung der Portraitbilder.

Auf diese Weise werden die bei der Videobildaufnahme mit der Bildwiederholfrequenz erfassten Portraitbilder in Echtzeit als Reaktion auf das Feststellen eines Fehlers optimiert. Derartige Optimierungsprozesse können ausgeführt werden, bis für wenigstens eines der Portraitbilder festgestellt wird, dass sowohl die ersten wie auch die zweiten Prüfkriterien erfüllt sind, so dass die Passbilddaten erzeugt werden können. Auf das Feststellen von Fehlern im Rahmen der Prüfung der ersten Prüfkriterien wird auf den Prozess des Aufnehmens der Portraitbilder mittels Videoaufnahme rückgekoppelt, um schließlich für das digitale biometrische Passbild geeignete Portraitbilddaten mittels Videoaufnahme bereitzustellen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: Sicherheitsdokument
- 2: Videobildaufnahmevorrichtung
- 3: Passbildaufnahmeeinrichtung
- 4: Person
- 5: Datenverarbeitungseinrichtung
- 6: Speichereinrichtung
- 7: Personalisierungseinrichtung
- 8: Speichereinrichtung des Sicherheitsdokument 1
- 9: Ausgabeeinrichtung
- 20, .., 26: Verfahrensschritte

## Patentansprüche

1. Verfahren zum Bestimmen von Passbilddaten, die ein digitales biometrisches Passbild für ein Sicherheitsdokument (1) repräsentieren, mit:
- Aufnehmen einer Folge von Portraitbildern für eine Person (4) mittels Videobildaufnahme mit einer Bildwiederholfrequenz und einer Aufnahmeauflösung für die Portraitbilder mittels einer Videobildaufnahmevorrichtung (2);
- Speichern von jeweiligen Portraitbilddaten mit der Aufnahmeauflösung und Portraitbilddaten mit einer gegenüber der Aufnahmeauflösung verminderten Auflösung für die Portraitbilder aus der Videobildaufnahme; und
- Bestimmen von Passbilddaten, die ein digitales biometrisches Passbild der Person (4) repräsentieren, aus den Portraitbildern der Videobildaufnahme, aufweisend:
- Auswählen von ersten Portraitbildern aus der Folge von Portraitbildern;
- Bestimmen, ob die Portraitbilddaten, welche den ersten Portraitbildern jeweils zugeordnet sind, ersten Prüfkriterien bezüglich einer Eignung für ein digitales biometrisches Passbild der Person (4) erfüllen, wobei das Prüfen für die Portraitbilddaten mit der verminderten Auflösung ausgeführt wird;
- Auswählen eines der ersten Portraitbilder, für welches die zugeordneten Portraitbilddaten zumindest eine notwendige Teilmenge der ersten Prüfkriterien erfüllen;
- Bestimmen, ob die Portraitbilddaten, welche dem einen der ersten Portraitbilder zugeordnet sind, zweite Prüfkriterien bezüglich der Eignung für das digitale biometrische Passbild der Person (4) erfüllen, wobei die zweiten Prüfkriterien von den ersten Prüfkriterien verschieden sind und das Prüfen für die Portraitbilddaten mit der verminderten Auflösung ausgeführt wird; und
- Erzeugen der Passbilddaten unter Verwendung der dem einen der ersten Portraitbilder zugeordneten Portraitbilddaten mit der Aufnahmeauflösung, wenn die Portraitbilddaten mit der verminderten Auflösung, welche dem einen der ersten Portraitbilder zugeordnet sind, zumindest eine notwendige Teilmenge der zweiten Prüfkriterien erfüllen.

2. Verfahren nach Anspruch 1, **dadurch gekennzeichnet, dass** das Aufnehmen der Folge von Portraitbildern für die Person (4) mittels Videobildaufnahme und das Speichern von jeweiligen Portraitbilddaten mit der Aufnahmeauflösung und Portraitbilddaten mit der verminderten Auflösung für die Portraitbilder während des Bestimmens der Passbilddaten zumindest zeitweise fortgesetzt wird.

3. Verfahren nach Anspruch 2, **dadurch gekennzeichnet, dass** das Aufnehmen der Folge von Portraitbildern für die Person (4) mittels Videobildaufnahme beendet wird, wenn die Passbilddaten erzeugt wurden.

4. Verfahren nach mindestens einem der vorangehenden Ansprüche, **dadurch gekennzeichnet, dass** die Portraitbilder aus der Videobildaufnahme in Echtzeit der Person (4) als Videobildausgabe auf einer Anzeigeeinrichtung angezeigt werden, welche mit der Videobildaufnahmeeinrichtung verbunden ist.

5. Verfahren nach mindestens einem der vorangehenden Ansprüche, **dadurch gekennzeichnet, dass** nach dem Erzeugen der Passbilddaten das digitale biometrische Passbild der Person (4) auf der Anzeigeeinrichtung angezeigt wird.

6. Verfahren nach mindestens einem der vorangehenden Ansprüche, **dadurch gekennzeichnet, dass** die Passbilddaten an eine Personalisierungseinrichtung (7) übertragen werden, die eingerichtet ist, die Passbilddaten zu verarbeiten, derart, dass eine Repräsentation des digitalen biometrischen Passbildes auf einem Dokumentenkörper für ein Sicherheitsdokument aufgebracht wird.

7. Verfahren nach mindestens einem der vorangehenden Ansprüche, **dadurch gekennzeichnet, dass** weiterhin Folgendes vorgesehen ist:
- Auswählen von zweiten Portraitbildern aus der Folge von Portraitbildern, die von den ersten Portraitbildern verschieden sind, wenn für keines der ersten Portraitbilder festgestellt wird, dass die zugeordneten Portraitbilddaten die notwendige Teilmenge der ersten und die notwendige Teilmenge der zweiten Prüfkriterien erfüllt sind;
- Bestimmen der den zweiten Portraitbildern zugeordneten Portraitbilddaten entsprechend dem Bestimmen der den ersten Portraitbildern zugeordneten Portraitbilddaten; und
- Erzeugen der Passbilddaten unter Verwendung von Portraitbilddaten, welche einem der zweiten Portraitbilder zugeordnet sind, wenn die Portraitbilddaten zumindest die notwendige Teilmenge der ersten Prüfkriterien und zumindest die notwendige Teilmenge der zweiten Prüfkriterien erfüllen.

8. Verfahren nach mindestens einem der vorangehenden Ansprüche, **dadurch gekennzeichnet, dass** die ersten Prüfkriterien ein oder mehrere der folgenden Prüfkriterien umfassen: Ausleuchtung des Portraitbildes, Hintergrund des Portraitbildes, Bildkontrast, Kopfposition, Augen und Blickrichtung, Kopfbedeckung und Sitz einer Brille.

9. Verfahren nach mindestens einem der vorangehenden Ansprüche, **dadurch gekennzeichnet, dass** aus den ersten Portraitbildern ein nicht geeignetes Portraitbild bestimmt wird, für welches die zugeordneten Portraitbilddaten die notwendige Teilmenge der ersten Prüfkriterien nicht erfüllen, wobei hierauf wenigstens einer der folgenden Schritte vorgesehen ist:
- Erzeugen von Steuerdaten als Reaktion auf das Feststellen eines Fehlers, dahingehend, dass bei dem nicht geeigneten Portraitbild eines der ersten Prüfkriterien nicht erfüllt ist, wobei
- die Steuerdaten eingerichtet sind, eine Ausgabe über eine Ausgabeeinrichtung (9) an die Person (4) zu steuern, und
- mit der Ausgabe ein Benutzerhinweis zum Beheben des Fehlers an die Person (4) ausgegeben wird; und
- Erzeugen von weiteren Steuerdaten als Reaktion auf das Feststellen eines weiteren Fehlers, dahingehend, dass bei dem nicht geeigneten Portraitbild ein weiteres der ersten Prüfkriterien nicht erfüllt ist, wobei die weiteren Steuerdaten eingerichtet sind, einen Betriebsparameter der Videobildaufnahmevorrichtung (2) und / oder einer der Videobildaufnahmevorrichtung (2) zugeordneten Beleuchtungseinrichtung für das Aufnehmen der Folge von Portraitbildern zu ändern.

10. Verfahren nach mindestens einem der vorangehenden Ansprüche, **dadurch gekennzeichnet, dass** mittels der zweiten Prüfkriterien geprüft wird, ob die Portraitbilddaten ein digitales biometrisches Passbild repräsentieren, welches dem ICAO-Standard für Passbilder für maschinenlesbare Sicherheitsdokumente genügt.

11. Verfahren nach mindestens einem der vorangehenden Ansprüche, **dadurch gekennzeichnet, dass** die Folge von Portraitbildern bei der Videobildaufnahme mit einer Bildwiederholfrequenz zwischen etwa 10 Bildern pro Sekunde und etwa 30 Bildern pro Sekunde aufgenommen werden.

12. Verfahren zum Personalisieren eines Sicherheitsdokuments, mit:
- Bestimmen von Passbilddaten, die ein digitales biometrisches Passbild repräsentieren, gemäß einem Verfahren nach mindestens einem der vorangehenden Ansprüche;
- Bereitstellen der Passbilddaten in einer Personalisierungseinrichtung (7);
- Bereitstellen eines Sicherheitsdokuments (1); und
- Personalisieren des Sicherheitsdokuments (1), wobei bei hierbei die Passbilddaten in der Personalisierungseinrichtung (7) verarbeitet werden und eine Repräsentation des digitalen biometrischen Passbildes auf dem Sicherheitsdokument (1) aufgebracht wird.

13. Verfahren nach Anspruch 12, **dadurch gekennzeichnet, dass** beim Aufbringen der Repräsentation des digitalen biometrischen Passbildes auf das Sicherheitsdokument (1) ein biometrisches Passbild aufgedruckt wird und / oder die Passbilddaten in einem elektronischen Speicherelement (8) des Sicherheitsdokuments (1) gespeichert werden.

14. Vorrichtung zum Bestimmen von Passbilddaten, die ein digitales biometrisches Passbild für ein Sicherheitsdokument (1) repräsentieren, mit einer Passbildaufnahmeeinrichtung (3), die für Folgendes eingerichtet ist:
- Aufnehmen einer Folge von Portraitbildern für eine Person (4) mittels Videobildaufnahme mit einer Bildwiederholfrequenz und einer Aufnahmeauflösung für die Portraitbilder mittels einer Videobildaufnahmevorrichtung (2);
- Speichern von jeweiligen Portraitbilddaten mit der Aufnahmeauflösung und Portraitbilddaten mit einer gegenüber der Aufnahmeauflösung verminderten Auflösung für die Portraitbilder aus der Videobildaufnahme; und
- Bestimmen von Passbilddaten, die ein digitales biometrisches Passbild der Person (4) repräsentieren, aus den Portraitbilder der Videobildaufnahme, aufweisend:
- Auswählen von ersten Portraitbildern aus der Folge von Portraitbildern;
- Bestimmen, ob die Portraitbilddaten, welche den ersten Portraitbildern jeweils zugeordnet sind, ersten Prüfkriterien bezüglich einer Eignung für ein digitales biometrisches Passbild der Person (4) erfüllen, wobei das Prüfen für die Portraitbilddaten mit der verminderten Auflösung ausgeführt wird;
- Auswählen eines der ersten Portraitbilder, für welches die zugeordneten Portraitbilddaten zumindest eine notwendige Teilmenge der ersten Prüfkriterien erfüllen;
- Bestimmen, ob die Portraitbilddaten, welche dem einen der ersten Portraitbilder zugeordnet sind, zweite Prüfkriterien bezüglich der Eignung für das digitale biometrische Passbild der Person (4) erfüllen, wobei die zweiten Prüfkriterien von den ersten Prüfkriterien verschieden sind und das Prüfen für die Portraitbilddaten mit der verminderten Auflösung ausgeführt wird; und
- Erzeugen der Passbilddaten unter Verwendung der dem einen der ersten Portraitbilder zugeordneten Portraitbilddaten mit der Aufnahmeauflösung, wenn die Portraitbilddaten mit der verminderten Auflösung, welche dem einen der ersten Portraitbilder zugeordnet sind, zumindest eine notwendige Teilmenge der zweiten Prüfkriterien erfüllen.

## Claims

1. A method for determining passport image data representing a digital biometric passport image for a security document (1), comprising:
- recording a sequence of portrait images for a person (4) by means of video image recording at a frame repetition rate and a recording resolution for the portrait images by means of a video image recording device (2);
- storing respective portrait image data with the recording resolution and portrait image data with a reduced resolution compared to the recording resolution for the portrait images from the video image recording; and
- determining passport image data representing a digital biometric passport image of the person (4) from the portrait images of the video image recording, comprising:
- selecting first portrait images from the sequence of portrait images;
- determining whether the portrait image data, which are respectively associated with the first portrait images, satisfy first test criteria with respect to a suitability for a digital biometric passport image of the person (4), wherein the test for the portrait image data is performed with the reduced resolution;
- selecting one of the first portrait images for which the associated portrait image data satisfy at least a necessary subset of the first test criteria;
- determining whether the portrait image data, which are associated with the one of the first portrait images, satisfy second test criteria with respect to the suitability for the digital biometric passport image of the person (4), wherein the second test criteria are different from the first test criteria and the test for the portrait image data is performed with the reduced resolution; and
- generating the passport image data using the portrait image data associated with the one of the first portrait images with the recording resolution if the portrait image data with the reduced resolution, which are associated with the one of the first portrait images, satisfy at least a necessary subset of the second test criteria.

2. The method according to claim 1, **characterized in that** the recording of the sequence of portrait images for the person (4) by means of video image recording and the recording of respective portrait image data with the recording resolution and portrait image data with the reduced resolution for the portrait images is continued at least temporarily during the determining of the passport image data.

3. The method according to claim 2, **characterized in that** the recording of the sequence of portrait images for the person (4) by means of video image recording is ended if the passport image data have been generated.

4. The method according to at least one of the preceding claims, **characterized in that** the portrait images from the video image recording are displayed in real time to the person (4) as a video image output on a display device connected to the video image recording device.

5. The method according to at least one of the preceding claims, **characterized in that** after the generation of the passport image data the digital biometric passport image of the person (4) is displayed on the display device.

6. The method according to at least one of the preceding claims, **characterized in that** the passport image data are transmitted to a personalization device (7) configured to process the passport image data such that a representation of the digital biometric passport image is applied to a document body for a security document.

7. The method according to at least one of the preceding claims, **characterized in that** the following is further provided:
- selecting second portrait images from the sequence of portrait images, which are different from the first portrait images, if it is not determined for any of the first portrait images that the associated portrait image data satisfy the necessary subset of the first and the necessary subset of the second test criteria;
- determining the portrait image data associated with the second portrait images according to the determination of the portrait image data associated with the first portrait images; and
- generating the passport image data using portrait image data which are associated with one of the second portrait images if the portrait image data satisfy at least the necessary subset of the first test criteria and at least the necessary subset of the second test criteria.

8. The method according to at least one of the preceding claims, **characterized in that** the first test criteria comprise one or more of the following test criteria: illumination of the portrait image, background of the portrait image, image contrast, head position, eyes and viewing direction, head covering and fit of a pair of glasses.

9. The method according to at least one of the preceding claims, **characterized in that** an unsuitable portrait image is determined from the first portrait images for which the associated portrait image data do not satisfy the necessary subset of the first test criteria, wherein at least one of the following steps is provided thereon:
- generating control data in response to the detection of an error, with the result that one of the first test criteria is not satisfied in the case of the unsuitable portrait image, wherein
- the control data are configured to control an output via an output device (9) to the person (4), and
- with the output a user instruction for correcting the error is output to the person (4); and
- generating further control data in response to the detection of a further error, with the result that a further one of the first test criteria is not satisfied in the case of the unsuitable portrait image, wherein the further control data are configured to change an operating parameter of the video image recording device (2) and/or of a lighting device assigned to the video image recording device (2) for recording the sequence of portrait images.

10. The method according to at least one of the preceding claims, **characterized in that** by means of the second test criteria it is tested whether the portrait image data represent a digital biometric passport image which complies with the ICAO standard for passport images for machine-readable security documents.

11. The method according to at least one of the preceding claims, **characterized in that** the sequence of portrait images are recorded during the video image recording at a frame repetition rate between approximately 10 images per second and approximately 30 images per second.

12. A method for personalizing a security document, comprising:
- determining passport image data representing a digital biometric passport image according to a method according to at least one of the preceding claims;
- providing the passport image data in a personalization device (7);
- providing a security document (1); and
- personalizing the security document (1), wherein the passport image data are processed in the personalization device (7) and a representation of the digital biometric passport image is applied to the security document (1).

13. The method according to claim 12, wherein a biometric passport image is printed on the security document (1) when applying the representation of the digital biometric passport image and/or the passport image data are stored in an electronic memory element (8) of the security document (1).

14. A device for determining passport image data representing a digital biometric passport image for a security document (1), comprising a passport image capturing device (3) configured to:
- record a sequence of portrait images for a person (4) by means of video image recording at a frame repetition rate and a recording resolution for the portrait images by means of a video image recording device (2);
- store respective portrait image data with the recording resolution and portrait image data with a reduced resolution compared to the recording resolution for the portrait images from the video image recording; and
- determine passport image data representing a digital biometric passport image of the person (4) from the portrait images of the video image recording, comprising:
- selecting first portrait images from the sequence of portrait images;
- determining whether the portrait image data, which are respectively associated with the first portrait images, satisfy first test criteria with respect to a suitability for a digital biometric passport image of the person (4), wherein the test for the portrait image data is performed with the reduced resolution;
- selecting one of the first portrait images for which the associated portrait image data satisfy at least a necessary subset of the first test criteria;
- determining whether the portrait image data, which are associated with the one of the first portrait images, satisfy second test criteria with respect to the suitability for the digital biometric passport image of the person (4), wherein the second test criteria are different from the first test criteria and the test for the portrait image data is performed with the reduced resolution; and
- generating the passport image data using the portrait image data associated with the one of the first portrait images with the recording resolution if the portrait image data with the reduced resolution, which are associated with the one of the first portrait images, satisfy at least a necessary subset of the second test criteria.

## Revendications

1. Procédé de détermination de données de photo d'identité, qui représentent une photo d'identité biométrique numérique pour un document de sécurité (1), comprenant :
- l'enregistrement d'une séquence de photos de portrait pour une personne (4) au moyen d'un enregistrement d'images vidéo avec un taux de rafraîchissement et une résolution d'enregistrement pour les photos de portrait au moyen d'un dispositif d'enregistrement d'images vidéo (2) ;
- la sauvegarde des données de photo de portrait respectives avec la résolution d'enregistrement et des données de photo de portrait avec une résolution réduite par rapport à la résolution d'enregistrement pour les photos de portrait de l'enregistrement vidéo ; et
- la détermination des données de photo d'identité, qui représentent une photo d'identité biométrique numérique de la personne (4), à partir des photos de portrait de l'enregistrement d'image vidéo, comportant :
- la sélection des premières photos de portraits de la séquence de photos de portraits ;
- la détermination si les données de photo de portrait, qui correspondent aux premières photos de portrait respectives, remplissent les premiers critères de test concernant l'adéquation d'une photo d'identité biométrique numérique de la personne (4), dans lequel le test des données de photo de portrait est effectué avec la résolution réduite ;
- la sélection d'une des premières photos de portrait, pour lesquelles les données de photo de portrait associées remplissent au moins une quantité partielle nécessaire des premiers critères de test ;
- la détermination si les données de photo de portrait associées à une des premières photos de portrait satisfont à des deuxièmes critères de test concernant l'adéquation à la photo d'identité biométrique numérique de la personne (4), dans lequel les deuxièmes critères de test sont différents des premiers critères de test et le test est effectué pour les données de photo de portrait avec la résolution réduite ; et
- la génération des données de photo d'identité à l'aide des données de photo de portrait associées à une des premières photos de portrait avec la résolution d'enregistrement, si les données de photo de portrait avec la résolution réduite, qui sont associées à une des premières photos de portrait, remplissent au moins une quantité partielle nécessaire des deuxièmes critères de test.

2. Procédé selon la revendication 1, **caractérisé en ce que** l'enregistrement de la séquence de photos de portrait pour la personne (4) au moyen d'un enregistrement d'image vidéo et la sauvegarde des données de photo de portrait respectives avec la résolution d'enregistrement et des données de photo de portrait avec la résolution réduite pour les photos de portrait sont prolongés au moins temporairement pendant la détermination des données de photos d'identité.

3. Procédé selon la revendication 2, **caractérisé en ce que** l'enregistrement de la séquence de photos de portrait de la personne (4) est terminée au moyen d'un enregistrement d'images vidéo, lorsque les données de photo d'identité ont été générées.

4. Procédé selon au moins une des revendications précédentes, **caractérisé en ce que** les photos de portrait provenant de l'enregistrement d'image vidéo sont affichées en temps réel à la personne (4) sous forme d'une image vidéo sortie sur un dispositif d'affichage, qui est connecté au dispositif d'enregistrement d'image vidéo.

5. Procédé selon au moins une des revendications précédentes, **caractérisé en ce que** après la génération des données de photo d'identité, la photo d'identité biométrique numérique de la personne (4) est affichée sur le dispositif d'affichage.

6. Procédé selon au moins une des revendications précédentes, **caractérisé en ce que** les données de photo d'identité sont transférées à un dispositif de personnalisation (7), qui est configuré pour traiter les données de photo d'identité de telle sorte qu'une représentation de la photo d'identité biométrique numérique soit appliquée à un corps de document pour un document de sécurité.

7. Procédé selon au moins une des revendications précédentes, **caractérisé en ce que** ce qui suit est également prévu :
- la sélection des deuxièmes photos de portrait à partir de la séquence de photos de portrait qui sont différentes des premières photos de portrait s'il est déterminé pour aucune des premières photos de portrait que les données de photo de portrait associées remplissent la quantité partielle nécessaire des premiers et la quantité partielle nécessaire des deuxièmes critères de test ;
- la détermination des données de photos de portrait associées aux deuxièmes photos de portrait conformément à la détermination des données de photo de portrait associées aux premières photos de portrait ; et
- la détermination des données de photo d'identité à l'aide des données de photo de portrait associées à une des deuxièmes photos de portrait, si les données de photo de portrait contiennent au moins la quantité partielle nécessaire des premiers critères de test et au moins la quantité partielle nécessaire des deuxièmes critères de test.

8. Procédé selon au moins une des revendications précédentes, **caractérisé en ce que** les premiers critères de test incluent un ou plusieurs des critères de test suivants : l'éclairage de l'image de portrait, l'arrière-plan de l'image de portrait, le contraste de l'image, la position de la tête, les yeux et l'orientation du regard, la coiffure et l'ajustement des lunettes.

9. Procédé selon au moins une des revendications précédentes, **caractérisé en ce que**, à partir des premières images de portrait, on détermine une photo de portrait inadéquate pour laquelle les données de photo de portrait associées ne remplissent pas la quantité partielle nécessaire des premiers critères de test, dans lequel au moins une des étapes suivantes est prévue :
- la génération de données de commande en réaction à la détection d'une erreur, dans la mesure où la photo de portrait inadéquate ne remplit pas un des premiers critères de test, dans lequel
- les données de commande sont configurées pour commander une sortie via un périphérique de sortie (9) vers la personne (4) et
- avec la sortie, une consigne d'utilisation pour corriger l'erreur est émise vers la personne (4) ; et
- la génération d'autres données de commande en réponse à la détection d'une autre erreur, dans la mesure où sur la photo de portrait inadéquate un autre des premiers critères de test n'est pas rempli, dans lequel les autres données de commande sont configurées pour déterminer un paramètre de fonctionnement du dispositif d'enregistrement d'images vidéo (2) et/ou d'un dispositif d'éclairage associé au dispositif d'enregistrement d'images vidéo (2) pour modifier l'enregistrement de la séquence de photos de portrait.

10. Procédé selon au moins une des revendications précédentes, **caractérisé en ce que** les deuxièmes critères de test sont utilisés pour vérifier si les données de photo de portrait représentent une photo d'identité biométrique numérique, qui satisfait à la norme ICAO pour les photos d'identité destinées aux documents de sécurité lisibles par machine.

11. Procédé selon au moins une des revendications précédentes, **caractérisé en ce que** la séquence de photos de portrait lors de l'enregistrement d'images vidéo est enregistrée à un taux de rafraichissement d'images compris entre environ 10 images par seconde et environ 30 images par seconde.

12. Procédé de personnalisation d'un document de sécurité, comprenant :
- la détermination de données de photo d'identité, qui représentent une photo d'identité biométrique numérique selon un procédé selon au moins une des revendications précédentes ;
- la fourniture des données de photo d'identité dans un dispositif de personnalisation (7) ;
- la fourniture d'un document de sécurité (1) ; et
- la personnalisation du document de sécurité (1), dans lequel les données de photo d'identité sont traitées dans le dispositif de personnalisation (7) et une représentation de la photo d'identité biométrique numérique est appliquée sur le document de sécurité (1).

13. Procédé selon la revendication 12, **caractérisé en ce que** lors de l'application de la représentation de la photo d'identité biométrique numérique sur le document de sécurité (1), une photo d'identité biométrique est imprimée et/ou les données de photo d'identité sont sauvegardées dans un élément de sauvegarde électronique (8) du document de sécurité (1).

14. Dispositif de détermination de données de photos d'identité, qui représentent une photographie d'identité biométrique numérique pour un document de sécurité (1), comportant un dispositif d'enregistrement de photographie d'identité (3), qui est configuré pour ce qui suit :
- l'enregistrement d'une séquence de photos de portrait pour une personne (4) au moyen d'un enregistrement d'images vidéo avec un taux de rafraîchissement et une résolution d'enregistrement pour les photos de portrait au moyen d'un dispositif d'enregistrement d'images vidéo (2) ;
- la sauvegarde des données de photo de portrait respectives avec la résolution d'enregistrement et des données de photo de portrait avec une résolution réduite par rapport à la résolution d'enregistrement pour les photos de portrait de l'enregistrement vidéo ; et
- la détermination des données de photo d'identité, qui représentent une photo d'identité biométrique numérique de la personne (4), à partir des photos de portrait de l'enregistrement d'image vidéo, comportant :
- la sélection des premières photos de portraits de la séquence de photos de portraits ;
- la détermination si les données de photo de portrait, qui correspondent aux premières photos de portrait respectives, remplissent les premiers critères de test concernant l'adéquation d'une photo d'identité biométrique numérique de la personne (4), dans lequel le test des données de photo de portrait est effectué avec la résolution réduite ;
- la sélection d'une des premières photos de portrait, pour lesquelles les données de photo de portrait associées remplissent au moins une quantité partielle nécessaire des premiers critères de test ;
- la détermination si les données de photo de portrait associées à une des premières photos de portrait satisfont à des deuxièmes critères de test concernant l'adéquation à la photo d'identité biométrique numérique de la personne (4), dans lequel les deuxièmes critères de test sont différents des premiers critères de test et le test est effectué pour les données de photo de portrait avec la résolution réduite ; et
- la génération des données de photo d'identité à l'aide des données de photo de portrait associées à une des premières photos de portrait avec la résolution d'enregistrement, si les données de photo de portrait avec la résolution réduite, qui sont associées à une des premières photos de portrait, remplissent au moins une quantité partielle nécessaire des deuxièmes critères de test.
